# EUROPÄISCHE PATENTSCHRIFT

(11) **EP 3 481 688 B1**
(45) Veröffentlichungstag und Bekanntmachung des Hinweises auf die Patenterteilung: **30.12.2020**
(21) Anmeldenummer: 17721654.6
(22) Anmeldetag: 04.05.2017
(51) Int. Cl.: B62D 37/04

(54) **VERFAHREN UND VORRICHTUNG ZUR DÄMPFUNG EINER SEITLICHEN PENDELBEWEGUNG BEI EINEM EINSPURIGEN KRAFTFAHRZEUG**
METHOD AND DEVICE FOR DAMPING LATERAL PENDULUM MOTION FOR SINGLE TRACK VEHICLE
PROCÉDÉ ET DISPOSITIV POUR AMORTIR LE MOUVEMENT PENDULAIRE Á VÉHICULE À DEUX ROUES

(30) Priorität: 06.07.2016 DE 102016212276
(43) Veröffentlichungstag der Anmeldung: 15.05.2019
(73) Patentinhaber: Robert Bosch GmbH, 70442 Stuttgart (DE)
(72) Erfinder: HENZLER, Markus, 70197 Stuttgart (DE); KLEWS, Matthias, 72076 Tuebingen (DE)
(86) Internationale Anmeldenummer: PCT/EP2017/060645
(87) Internationale Veröffentlichungsnummer: WO 2018/007041

(56) Entgegenhaltungen:
- WO-A1-2004/026649
- DE-A1-102013 200 020
- US-A1- 2011 163 516

## Beschreibung

### Stand der Technik

Unter einer Pendelbewegung versteht man eine Eigenschwingform von Zweirädern, die aus einer phasenverschobenen Drehbewegung des Rahmens und des Lenksystems besteht. Diese Schwingform hat typischerweise eine Frequenz von ca. 2,5 - 5 Hz. Die Amplitude dieser Schwingung ist von vielen Faktoren abhängig. Bei Motorrädern kann sich das Pendeln insbesondere bei hohen Geschwindigkeiten und insbesondere bei Geradeausfahrt bemerkbar machen, angeregt durch äußere Störungen wie Fahrbahnunebenheiten oder Luftverwirbelungen. Das Pendeln kann sich sehr schnell aufschaukeln und zu unkontrolliertem Fahrverhalten führen. Da die Bewegungsvorgänge des Fahrers üblicherweise auf maximale Frequenzen von 1 - 2 Hz beschränkt sind, kann er dem Pendeln kaum gezielt entgegenwirken.

Aus der DE 10 2008 011 575 A1, welche die Merkmale der Präambel von Anspruch 1 zeigt, ist ein Verfahren zur Beseitigung oder Verminderung einer Pendelbewegung bei einem einspurigen Kraftfahrzeug bekannt, wobei zumindest ein Rollwinkel und/oder eine Rollrate des Fahrzeugs bestimmt wird, zur Erkennung der Pendelbewegung des Fahrzeugs der Rollwinkel und/oder die Rollrate ausgewertet wird und bei Erkennen eines Auftretens einer Fahrzeugpendelbewegung eine Regelung des Bremsdrucks an mindestens einem Rad und/oder eine Regelung eines Antriebsmoments durchgeführt wird.

### Offenbarung der Erfindung

Die Erfindung betrifft ein Verfahren zur Dämpfung einer seitlichen Pendelbewegung bei einem einspurigen Kraftfahrzeug mit einem Vorderrad, bei dem während der Fahrt
- das Vorliegen einer Pendelbewegung ermittelt wird und
- abhängig davon das Trägheitsmoment des Vorderrades erhöht wird.

Dadurch erfolgt eine effektive Dämpfung der Pendelbewegung. Das einspurige Kraftfahrzeug weist neben dem Vorderrad insbesondere auch ein Hinterrad auf, wobei die Dämpfungsmaßnahmen am Vorderrad erfolgen.

Eine vorteilhafte Ausgestaltung der Erfindung ist dadurch gekennzeichnet, dass das Vorliegen einer seitlichen Pendelbewegung anhand der Ausgangssignale eines Querbeschleunigungssensors und/oder eines Gierratensensors erkannt wird. Derartige Sensoren sind in modernen einspurigen Kraftfahrzeugen wie Motorrädern im allgemeinen bereits serienmäßig verbaut.

Eine vorteilhafte Ausgestaltung der Erfindung ist dadurch gekennzeichnet, dass die Erhöhung des Trägheitsmomentes des Vorderrades dadurch erfolgt, dass wenigstens ein am Vorderrad angebrachtes Gewichtselement in die nach radaußen weisende Radialrichtung verschoben wird. Insbesondere handelt es sich aber um mehrere Gewichtselemente, welche azimutal in regelmäßigen Winkelabständen angebracht sind und jeweils radial nach außen verschoben werden.

Eine vorteilhafte Ausgestaltung der Erfindung ist dadurch gekennzeichnet, dass das Gewichtselement entlang einer Speiche des Vorderrades nach außen verschoben wird. Die Speiche kann hierbei zur mechanischen Führung des Gewichtselementes benutzt werden.

Eine vorteilhafte Ausgestaltung der Erfindung ist dadurch gekennzeichnet, dass das Gewichtselement nach erfolgter Dämpfung der Pendelbewegung des Kraftfahrzeugs mittels einer Spindel oder eines Seilzugs wieder in die ursprüngliche Position zurückgebracht wird.

Eine vorteilhafte Ausgestaltung der Erfindung ist dadurch gekennzeichnet, dass die Erhöhung des Trägheitsmomentes des Vorderrades dadurch erfolgt, dass wenigstens eine parallel zum Vorderrad am Rahmen des Kraftfahrzeugs angebrachte, im Ausgangszustand nichtrotierende Scheibe mit dem Vorderrad in eine kraftschlüssige Verbindung gebracht wird, so dass sie mit diesem mitrotiert.

Eine vorteilhafte Ausgestaltung der Erfindung ist dadurch gekennzeichnet, dass die nichtrotierende Scheibe mittels einer Kupplung mit dem Vorderrad in die kraftschlüssige Verbindung gebracht wird.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

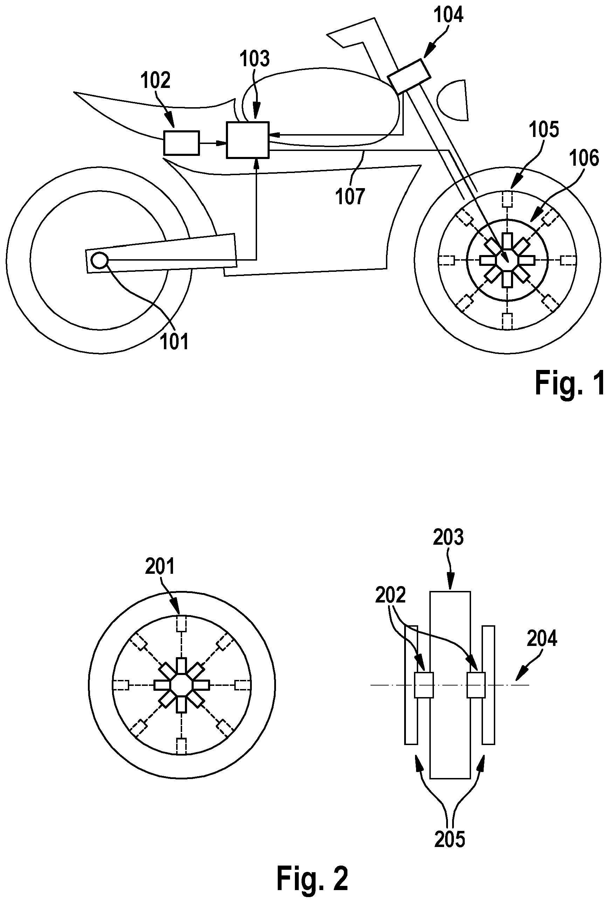

Die Zeichnung umfasst die Figuren 1 und 2.
Fig. 1 zeigt die seitliche Ansicht eines Motorrads mit der Einzeichnung wesentlicher Komponenten.
Fig. 2 zeigt links die Seitenansicht eines Rades mit den radial verschiebbaren Massenelementen. Rechts ist die Vorderansicht eines Rades mit den ankuppelbaren Massenscheiben dargestellt.

Wenn bei einem motorisierten Zweirad eine Pendelbewegung kritische Ausmaße annimmt, wird dieser Zustand durch Sensoren erkannt, welche die Bewegung von Rahmen und/oder Lenksystem sensieren. Daraufhin wird mit einer mechanischen Vorrichtung durch Verschiebung vorhandener Massen oder Anbringung zusätzlicher Massen an das Vorderrad das Trägheitsmoment des Vorderrads erhöht, welches eine dämpfende Wirkung auf den Pendelvorgang ausübt. Nach Abklingen des Pendelns wird der ursprüngliche Zustand wiederhergestellt. Dieses Vorgehen kann auch das Pendeln von motorisierten Zweirädern stabilisieren, welche sowohl mit als auch ohne Lenkungsdämpfer ausgestattet sind.

Am Motorradrahmen ist ein Inertialsensor verbaut, welcher die Querbeschleunigung und/oder die Gierrate messen kann. Über typische Muster dieser Sensorgrößen kann das Pendeln erkannt werden. Die Zuverlässigkeit dieser Sensierung kann erhöht werden, indem am Lenksystem ein weiterer Inertialsensor zur Messung der Gierrate um die Hochachse verbaut wird. Die Gierrate des Lenksystems kann auch durch einen Lenkwinkelsensor, z.B. ein Linearpotentiometer, ermittelt werden, dessen den Lenkwinkel kennzeichnendes Ausgangssignal durch Zeitableitung die Gierrate des Lenksystems ergibt. Die Ausgangssignale des Sensorsystems werden von einem Algorithmus auf typische Muster der Pendelsituation untersucht, z.B. Oszillationen mit den pendeltypischen Frequenzen und/oder Phasenverschiebungen zwischen den Gierratenoszillationen von Rahmen und Lenker. Das Pendeln tritt typischerweise bei hohen Geschwindigkeiten > 130 km/h auf, deshalb kann die mittels eines Raddrehzahlsensors ermittelte Radgeschwindigkeit hinzugezogen werden. Der Algorithmus kann beispielsweise in einem ABS-Steuergerät implementiert werden. Nach Erkennen einer Pendelsituation wird das Trägheitsmoment des Vorderrades erhöht. Das kann z.B. durch in die radäußere Radialrichtung des Rades verschiebbare Zusatzmassen bzw. Gewichtselemente bzw. Massenelemente erfolgen. Die Massen befinden sich zunächst in der Nähe des Radlagers. Bei auftretender Pendelneigung des Motorrads werden die Massen in Richtung Felge verschoben. Diese zur Stabilisierung notwendige Bewegung zur Felge hin kann durch die Zentrifugalkraft erfolgen. Für die Rückbewegung der Massen sind elektrisch betriebene Spindeln denkbar oder Seilzüge, welche die Massen nach der Stabilisierung motorbetrieben wieder zurückziehen. Dazu sind eine Spannungsversorgung am Rad und eine Signalleitung zum sich drehenden Rad erforderlich. Anstelle der Signalleitung kann auch eine drahtlose Funkverbindung vorgesehen sein. Neben einer Pendelstabilisierung können die Massen auch für eine automatische Radunwuchtkorrektur verwendet werden, sofern die einzelnen Massenelemente einzeln bzw. individuell angesteuert werden können.

Eine andere Möglichkeit, das Trägheitsmoment des Vorderrades zu erhöhen besteht darin, eine oder mehrere drehbare Scheiben parallel zum Vorderrad anzubringen. Bei stabiler Fahrt werden diese Scheiben im Ruhezustand gehalten. Dies kann beispielsweise durch eine Reibungsbremse erfolgen. Wenn Pendeln auftritt, werden die Scheiben durch eine Kupplungsvorrichtung, z.B. eine Reibkupplung, mit dem Vorderrad verbunden und drehen sich mit der Drehzahl des Vorderrades. Das Einkuppeln muss hinreichend sanft geschehen, so dass durch das schnell steigende Trägheitsmoment das Vorderrad nicht zu stark abgebremst wird. Nach Abklingen der Pendelsituation werden die Scheiben wieder entkoppelt und sanft abgebremst.

Bei beiden beschriebenen Varianten bleibt die Gesamtmasse des Lenksystems stets konstant.

In Fig. 1 ist die Seitenansicht eines Motorrads dargestellt. Dabei kennzeichnet 101 den Raddrehzahlsensor des Hinterrades und 102 die am Motorrad verbaute Inertialsensorik, welche insbesondere die Beschleunigungen in verschiedene Raumrichtungen sowie die Drehgeschwindigkeiten bzw. Winkelgeschwindigkeiten um verschiedene Raumachsen erfasst. 104 kennzeichnet den Lenkwinkelsensor. Die Ausgangssignale der Sensoren 101, 102 und 104 werden einem Steuergerät 103 zugeführt und abhängig davon ermittelt, ob eine seitliche Pendelbewegung des Motorrads vorliegt oder nicht. Bei Vorliegen einer Pendelbewegung wird über eine Ansteuerleitung 107 eine Aktuatorik am Vorderrad angesteuert, welche wenigstens ein Gewichtselement 105 radial in die radaußen weisende Richtung verschiebt oder wenigstens eine parallel zum Vorderrad am Rahmen des Kraftfahrzeugs angebrachte, im Ausgangszustand nichtrotierende Scheibe 106 mit dem Vorderrad in eine kraftschlüssige Verbindung bringt. Anstelle der Ansteuerleitung 107 kann z.B. auch eine drahtlose Funkverbindung verwendet werden.

In Fig. 2 ist in der linken Abbildung eine seitliche Ansicht des Vorderrades eines Motorrads dargestellt. 201 kennzeichnet die verschiebbaren Massen, deren Verschiebung bei Vorliegen einer Pendelbewegung z.B. mittels elektrisch betriebener Spindeln oder Seilzügen erfolgt.

In der rechten Abbildung von Fig. 2 ist die Vorderansicht des Vorderrades eines Motorrads dargestellt. Eingezeichnet sind das Vorderrad 203, dessen Drehachse 204, die Massenscheiben 205 und die Kupplungsvorrichtung 202. Die Massenscheiben 205 stehen bei Normalbetrieb still und drehen bei Vorliegen einer Pendelbewegung mit dem Vorderrad mit.

## Patentansprüche

1. Verfahren zur Dämpfung einer seitlichen Pendelbewegung bei einem einspurigen Kraftfahrzeug mit einem Vorderrad, bei dem während der Fahrt
- das Vorliegen einer Pendelbewegung ermittelt wird, **dadurch gekennzeichnet, dass**
- abhängig davon das Trägheitsmoment des Vorderrades (203) erhöht wird.

2. Verfahren nach Anspruch 1, **dadurch gekennzeichnet, dass** das Vorliegen einer seitlichen Pendelbewegung anhand der Ausgangssignale eines Querbeschleunigungssensors und/oder eines Gierratensensors (102) erkannt wird.

3. Verfahren nach Anspruch 2, **dadurch gekennzeichnet, dass** die Erhöhung des Trägheitsmomentes des Vorderrades (203) dadurch erfolgt, dass wenigstens ein am Vorderrad (203) angebrachtes Gewichtselement in die nach radaußen weisende Radialrichtung verschoben wird.

4. Verfahren nach Anspruch 3, **dadurch gekennzeichnet, dass** das Gewichtselement (201) entlang einer Speiche des Vorderrades (203) nach außen verschoben wird.

5. Verfahren nach Anspruch 4, **dadurch gekennzeichnet, dass** das Gewichtselement (201) nach erfolgter Dämpfung der Pendelbewegung des Kraftfahrzeugs mittels einer Spindel oder eines Seilzugs wieder in die ursprüngliche Position zurückgebracht wird.

5. Verfahren nach Anspruch 1, **dadurch gekennzeichnet, dass** die Erhöhung des Trägheitsmomentes des Vorderrades (203) dadurch erfolgt, dass wenigstens eine parallel zum Vorderrad am Rahmen des Kraftfahrzeugs angebrachte, im Ausgangszustand nichtrotierende Scheibe (106) mit dem Vorderrad (203) in eine kraftschlüssige Verbindung gebracht wird, so dass sie mit diesem mitrotiert.

6. Verfahren nach Anspruch 5, **dadurch gekennzeichnet, dass** die nichtrotierende Scheibe (106) mittels einer Kupplung (202) mit dem Vorderrad (203) in die kraftschlüssige Verbindung gebracht wird.

7. Vorrichtung, enthaltend Mittel, die zur Durchführung des Verfahrens nach einem der Ansprüche 1-6 ausgestaltet sind.

## Claims

1. Method for damping a lateral pendulum movement in the case of a single-track motor vehicle with a front wheel, in the case of which method, during travelling,
- the presence of a pendulum movement is determined, **characterized in that**,
- in a manner which is dependent thereon, the moment of inertia of the front wheel (203) is increased.

2. Method according to Claim 1, **characterized in that** the presence of a lateral pendulum movement is detected on the basis of the output signals of a lateral acceleration sensor and/or a yaw rate sensor (102).

3. Method according to Claim 2, **characterized in that** the increase of the moment of inertia of the front wheel (203) takes place by virtue of the fact that at least one weight element which is attached to the front wheel (203) is displaced in the radial direction which points towards the outside of the wheel.

4. Method according to Claim 3, **characterized in that** the weight element (201) is displaced towards the outside along a spoke of the front wheel (203).

5. Method according to Claim 4, **characterized in that**, after damping of the pendulum movement of the motor vehicle has taken place, the weight element (201) is moved back into the original position again by means of a spindle or a control cable.

5. Method according to Claim 1, **characterized in that** the increase of the moment of inertia of the front wheel (203) takes place by virtue of the fact that at least one disc (106) which does not rotate in the starting state and is attached to the frame of the motor vehicle parallel to the front wheel is brought into a non-positive connection with the front wheel (203), with the result that it corotates with the latter.

6. Method according to Claim 5, **characterized in that** the non-rotating disc (106) is brought into the non-positive connection with the front wheel (203) by means of a clutch (202).

7. Apparatus, comprising means which are configured for carrying out the method according to one of Claims 1 to 6.

## Revendications

1. Dispositif pour amortir un mouvement pendulaire latéral dans un véhicule automobile à une trace comprenant une roue avant, dans lequel, pendant la conduite
- la présence d'un mouvement pendulaire est déterminée,
**caractérisé en ce que**
- en fonction de celle-ci le couple d'inertie de la roue avant (203) est augmenté.

2. Procédé selon la revendication 1, **caractérisé en ce que** la présence d'un mouvement pendulaire latéral peut être détectée à l'aide des signaux de sortie d'un capteur d'accélération transversale et/ou d'un capteur de vitesse de lacet (102).

3. Procédé selon la revendication 2, **caractérisé en ce que** l'augmentation de couple d'inertie de la roue avant (203) s'effectue en déplaçant au moins un élément de poids monté sur la roue avant (203) dans la direction radiale orientée vers l'extérieur de la roue.

4. Procédé selon la revendication 3, **caractérisé en ce que** l'élément de poids (201) est décalé vers l'extérieur le long d'un rayon de la roue avant (203) .

5. Procédé selon la revendication 4, **caractérisé en ce que** l'élément de poids (201), après l'amortissement du mouvement pendulaire du véhicule automobile, est ramené au moyen d'une broche ou d'un câble Bowden dans la position initiale.

5. Procédé selon la revendication 1, **caractérisé en ce que** l'augmentation du couple d'inertie de la roue avant (203) s'effectue par le fait qu'au moins un disque (106) non rotatif dans l'état initial, monté parallèlement à la roue avant sur le cadre du véhicule automobile, est amené en liaison d'engagement par force avec la roue avant (203) de manière à tourner avec celle-ci.

6. Procédé selon la revendication 5, **caractérisé en ce que** le disque non rotatif (106) est amené en liaison par engagement par force avec la roue avant (203) au moyen d'un accouplement (202).

7. Dispositif comprenant des moyens qui sont réalisés pour mettre en œuvre le procédé selon l'une quelconque des revendications 1 à 6.
